# EUROPEAN PATENT APPLICATION

(11) **EP 2 420 130 A1**
(43) Date of publication of application: **22.02.2012**
(21) Application number: 10764116.9
(22) Date of filing: 16.04.2010
(51) Int. Cl.: A01D 69/02, A01D 34/00, H02P 7/00

(54) **SELF-PROPELLED LAWN MOWER**

(30) Priority: 17.04.2009 CN 200910135455
(71) Applicant: Positec Power Tool (Suzhou) Co., Ltd, Suzhou, Jiangsu 215123 (CN)
(72) Inventor: BORINATO, Gianni, I-36015 Schio (VI) (IT)
(74) Representative: Stuttard, Garry Philip
(86) International application number: PCT/CN2010/071857
(87) International publication number: WO 2010/118703

(57) **Abstract**

A self-propelled lawn mower has an on-board battery, an electric blade motor for rotating a grass cutting blade, said blade motor being operationally connected to the battery, an electric drive motor for propelling the lawn mower along a grass surface to be cut, said drive motor being operationally connected to the battery, and a control unit for controlling at least the operation of the electric drive motor and of the blade motor. There is provided a speed monitor for monitoring the speed of the drive motor. This monitor is also connected to the control unit. There is also provided a motion speed selector for selecting a predetermined speed for the drive motor. The motion speed selector is also connected to the control unit. A total energy monitor is provided for monitoring the total energy consumption of the battery. The total energy consumption is the electrical energy consumed by the drive motor plus the electrical energy consumed by the blade motor. The total energy monitor is also operationally connected to the control unit. The user can select a predetermined maximum energy value by means of a maximum energy selector, which is operationally connected to the control unit. The control unit is designed to keep the speed of the lawn mower on the predetermined speed value, independently of the pushing force of the user, and to reduce the total energy as soon as the total energy exceeds the predetermined maximum energy value. The lawn mower affords a comfortable operation for the user, and the battery is protected from overload.

## Description

This invention relates to a battery-powered lawn mower. More particularly, it relates to a self-propelled lawn mower, having
- an on-board battery,
- an electric blade motor for rotating a grass cutting blade, said blade motor being operationally connected to said battery,
- an electric drive motor for propelling the lawn mower along a grass surface to be cut, said drive motor being operationally connected to said battery, and
- a control unit for controlling the operation of the electric drive motor, thereby controlling the movement of the lawn mower.

From US 5,442,901, there is known such a lawn mower. It comprises a chassis, at least three wheels pivotally cooperating with the chassis for positioning the chassis above a grass surface to be cut, a grass cutting blade, an electric blade motor mounted on the chassis having a rotary output operatively connected to the grass cutting blade to rotate the blade relative to the grass surface be cut, and an electric drive motor cooperating with the chassis and being operatively connected to at least one of said wheels to propel the chassis along the grass surface. An electric battery is mounted on the chassis for supplying electric power to the blade motor as well as to the drive motor. A blade motor switch is electrically interposed between the battery and the blade motor for regulating the operation of the blade motor. There is also provided a drive motor control unit which is electrically interposed between the drive motor and the battery to regulate the operation of the drive motor. This regulation is performed independently from the operation of the blade motor. The at least three wheels comprise a pair of front wheels, which are mounted on the forward portion of the chassis, and also a pair of rear wheels, which are mounted on the rearward portion of the chassis. The drive motor is explicitly operatively connected to the pair of front wheels.

It must be stressed that according to this prior art document, the speed of the lawn mower is not kept constant. Instead, the speed control unit is provided to regulate the amount of energy delivered to the drive motor. That keeps the energy supplied by the battery constant during all operation conditions and working situations. The actual motor speed is determined by the power supplied to the motor as well as by the load. At a given setting of the electrical energy, which is to be supplied to the drive motor, the motor speed can vary depending up on the amount of force the user applies to the handle to push the mower and the amount of variation and resistance resulting from changing grass height or terrain.

It has turned out that controlling the energy supplied to the drive motor gives the lawn mower a behavior which is felt to be unusual for the user. The lawn mower tends to accelerate when the grass height becomes lower, and it tends to slow down when the grass height increases during operation. The user feels uncomfortable.

It must be also stressed that there are no precaution measures in case that the lawn mower enters high grass, and that the battery, which is supplying the drive motor as well as the blade motor, tends to exceed a maximum energy delivery value.

If such a maximum energy value is exceeded, the blade motor may come to a sudden stand still, or the battery may be damaged.

Accordingly, it is an object of the present invention to provide a self-propelled lawn mower of the type mentioned in the introductory part, which gives the user a comfortable feeling during operation. Another object of the invention is to protect the battery from exceeding its maximum energy delivery value, thereby providing for a longer running time.

It is still another object of the invention to provide a control for a drive motor for propelling the lawn mower, wherein the speed of the lawn mower is not dependent on the push effort applied by the user during operation. But nevertheless, it should be possible for the user to select a desired speed for mowing the grass.

In order to meet these objects, a first basic embodiment of the invention is characterized by
- an on-board battery,
- an electric blade motor for rotating a grass cutting blade, said blade motor being operationally connected to said battery,
- an electric drive motor for propelling the lawn mower along a grass surface to be cut, said drive motor being operationally connected to said battery,
- a control unit for controlling the operation of said electric drive motor, thereby controlling the movement of the lawn mower,
- a speed monitor for monitoring the speed of said drive motor, said speed monitor being operationally connected to said control unit,
- a motion speed selector for selecting a predetermined speed of said drive motor, said motion speed selector being operationally connected to said control unit,
- a total energy monitor for monitoring the total energy consumption of said battery, said total energy consumption being the electrical energy consumed by said drive motor plus the electrical energy consumed by said blade motor, said total energy monitor being operationally connected to said control unit,
- a maximum total energy selector for selecting a predetermined maximum energy value, said maximum total energy selector being operationally connected to said control unit, and
- said control unit being designed
   - to keep the speed of the lawn mower on said predetermined speed , independently of the pushing force of the user, and
   - to reduce the total energy as soon as the total energy exceeds said predetermined maximum energy value.

Keeping the speed on a constant value improves the comfortable feeling of the user. The desired speed can be set by the user by means of the speed selector. The reduction of total energy, as required in the case of an excess energy loss of the battery, results in a reduction of the speed of the drive motor. This leads to a saving of life time for the battery and to a reduction of losses.

In accordance with this first basic embodiment, the reduction of the energy can preferably be performed by reducing the predetermined speed of the drive motor, thereby reducing the actual speed of the drive motor. Such a design is specifically advantageous. It must be emphasized: when the speed of the drive motor is reduced due to such a reduction of the predetermined speed, the energy supplied by the battery will be reduced. Since already comparatively small reductions of the drive speed lead to a comparatively high decrease of the load, the energy now supplied by the blade motor will decrease to a comparatively high degree. Because it must be kept in mind that under basically all operation conditions, the energy consumption of the blade motor is much higher than the energy consumption of the drive motor.

In a relatively simple practical realization, the predetermined maximum total energy value may be represented by a maximum total current value and the maximum total energy selector may be represented by a maximum total current selector for setting the predetermined maximum total current value.

In accordance with a further development, the total energy monitor is designed to measure a first current flowing through said blade motor and to measure a second current flowing through said drive motor, and to add said first and second currents to each other to deliver a total amount which is representative of the total energy consumption derived from the battery.

Alternatively, the total energy monitor may be designed for measuring directly the total current flowing to or from the battery.

A load monitor may be provided for monitoring the load of the blade motor. This load monitor will be operationally connected to the control unit. The blade load measured by the load monitor is representative of the blade load current and thereby representative of the electrical energy consumed by the blade motor. In this design, the control unit will be used to determine at least approximately the total energy.

For the user it may be of a particular advantage when there is a direction selector operationally connected to the control unit. The direction selector has at least a first position for forward movement and a second position for rearward movement of the lawn mower. In this design the transition from the first to the second position may directly result in a reversal of the rotational direction of the drive motor. The direction selector may be positioned on the handle of the lawn mower.

It has turned out that it is of particular advantage if the drive motor is a permanent magnet DC motor. It may have an output of less than 0,5 horse power.

A typical battery for use in this invention is a lead acid battery having a voltage of 24 volts and a capacity in the range of 14 to 20 ampere hours.

A second basic embodiment of the invention is based on the reflection that the blade motor is by far the main energy consumer of both motors. Therefore it may be sufficient to measure the energy consumption of the blade motor for determining the energy which is supplied by the battery. In accordance with this second basic embodiment, a self-propelled lawn mower of the type described in introductory part is characterized in
- an on-board battery,
- an electric blade motor for rotating a grass cutting blade, said blade motor being operationally connected to said battery,
- an electric drive motor for propelling the lawn mower along a grass surface to be cut, said drive motor being operationally connected to said battery,
- a control unit for controlling the operation of said electric drive motor, thereby controlling the movement of the lawn mower,
- a speed monitor for monitoring the speed of said drive motor, said speed monitor being operationally connected to said control unit,
- a motion speed selector for selecting a predetermined speed for said drive motor, said motion speed selector being operationally connected to said control unit,
- a blade motor energy monitor for monitoring the energy consumption of said blade motor, said blade motor energy monitor being operationally connected to said control unit,
- a maximum blade motor energy selector for selecting a predetermined maximum blade motor energy value,
- said control unit being designed
   - to keep the speed of the lawn mower on said predetermined speed, independently of the pushing force of the user, and
   - to reduce the predetermined speed as soon as the energy consumption of said blade motor exceeds said predetermined maximum blade motor energy value.

Further developments of this design are in accordance with the embodiments of the first basic embodiment which have been explained above.

Thus, the control unit may be designed to use a current flowing through said blade motor as representation of said energy consumption of said blade motor.

And direction selector may be operationally connected to said control unit, said direction selector having at least a first position for forward movement and a second position for rearward movement of the lawn mower.

In accordance with a third basic embodiment of the invention, a self-propelled lawn mower comprises
- an on-board battery,
- an electric blade motor for rotating a grass cutting blade, said blade motor being operationally connected to said battery,
- an electric drive motor for propelling the lawn mower along a grass surface to be cut, said drive motor being operationally connected to said battery,
- a control unit for controlling the operation of said electric drive motor, thereby controlling the movement of the lawn mower,
- a speed monitor for monitoring the speed of said drive motor, said speed monitor being operationally connected to said control unit,
- a motion speed selector for selecting a predetermined speed for said drive motor, said motion speed selector being operationally connected to said control unit,
- a blade load monitor for monitoring the blade load of said blade motor, said blade load being the representative of the blade motor current and thereby approximately of the total energy consumed by said blade motor and said drive motor, said blade load monitor being operationally connected to said control unit for approximately determining said total energy, and
- a maximum total energy selector for selecting a predetermined maximum total energy value, said maximum total energy selector being operationally connected to said control unit,
   wherein said control unit is designed
   - to keep the speed of the lawn mower on said predetermined speed, independently of the pushing force of the user, and
   - to reduce the total energy as soon as the total energy, which is determined from blade load, exceeds said predetermined maximum blade load value.

Also here said reduction of energy may be performed by reducing the predetermined speed of said drive motor, thereby reducing the actual speed of said drive motor.

It must be stressed that all operations mentioned in connection with the invention can and should preferably be performed by means of software which is contained in the control unit.

The above objects and other objects, features, and advantages of the present invention are readily apparent from the following detailed description of examples for carrying out the invention when taken in connection with the accompanying drawings. The same reference numerals and signs will be used for the same or equivalent elements throughout the Figures and description.
Fig. 1 shows diagrams of the drive energy, motion speed, blade energy and total energy in dependence on time t, when the user does not make any pushing efforts and when the total energy is always below a predetermined maximum energy value, in accordance with a first basic embodiment of the invention;
Fig. 2 illustrates the same diagrams including a maximum predetermined value for the case, that the user applies some effort to push the handle of the lawn mower, and that the total energy exceeds the maximum energy value in a certain time interval;
Fig. 3 illustrates diagrams as in Fig. 2 for the case that the blade motor energy exceeds a predetermined maximum value, in accordance with a second basic embodiment of the invention;
Fig. 4 illustrates the principle of a design, by which the properties illustrated in Fig. 2 can be achieved;
Fig. 5 illustrates a design similar to Fig. 4, wherein a different device for measuring the total energy consumption is used;
Fig. 6 illustrates a design similar to Fig. 4, yet in accordance with the second basic embodiment of the invention, yet in which the comparison of the measured total energy with a predetermined maximum total energy value is replaced by a comparison of the blade motor energy with a predetermined maximum blade motor energy value;
Fig. 7 illustrates a design similar to Fig. 6, wherein a comparison of the blade motor current with a predetermined maximum blade motor current value takes place, and
Fig. 8 illustrates a design according to the third basic embodiment of the invention.

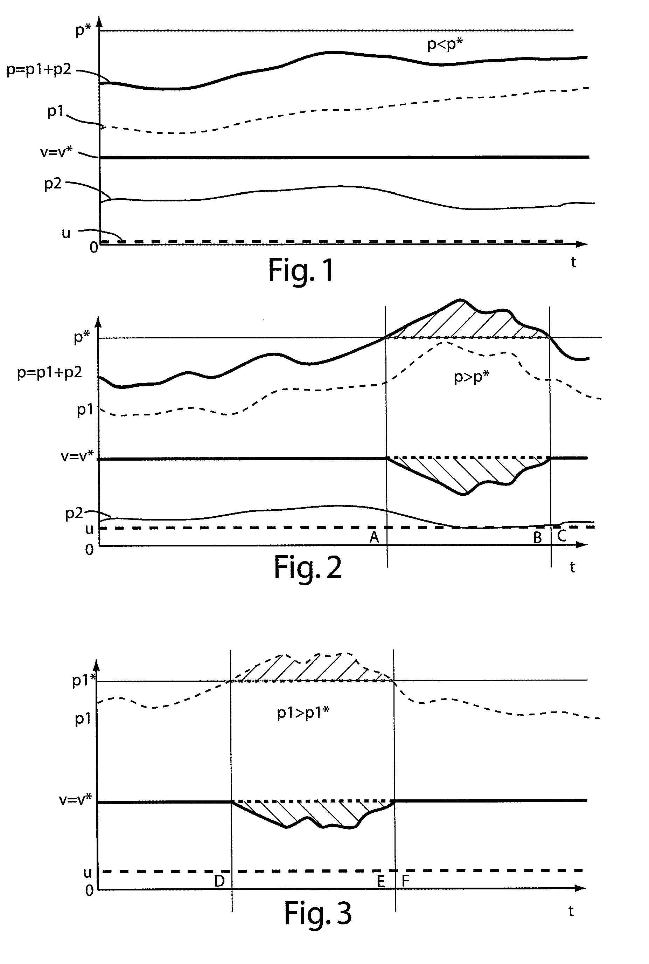

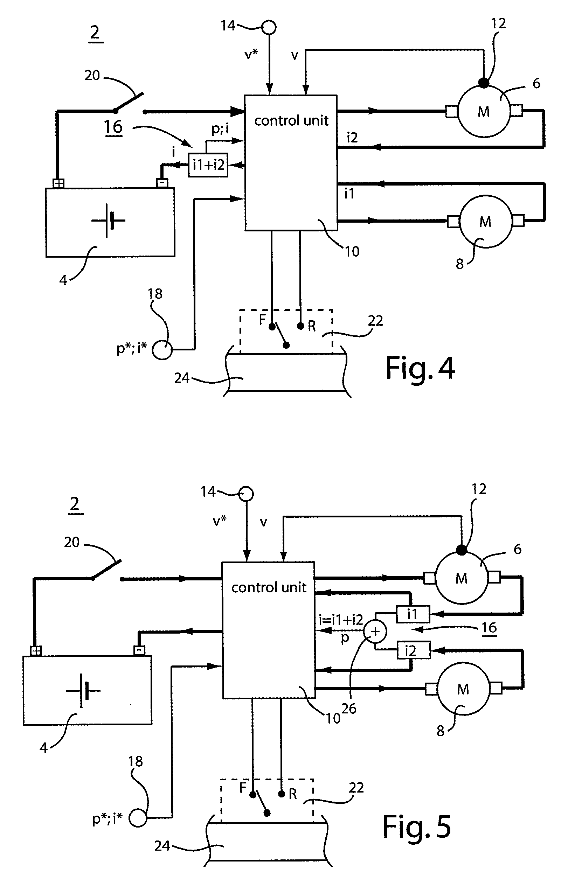

Figs. 1 and 2 show an exemplary driving scheme in dependence of time t according to the invention for a battery-powered lawn mower. Except for the control unit, the lawn mower is of conventional construction. Thus, it has an electric blade motor for rotating a grass cutting blade. The blade motor is operationally connected to the battery. It also has an electric drive motor for propelling the lawn mower along a grass surface to be cut. The electric drive motor is also operationally connected to the battery. As will be explained with reference to Figs. 4 to 7, a control unit and associated elements are provided for controlling the movement of the lawn mower via the blade motor as well as via the drive motor. The electric drive motor is preferably working on the at least one of the rear wheels.

For easier explanation purposes of the invention, in Fig. 1 it is assumed that the user does not push the lawn mower and thereby does not assist in its operation u = o. The effect of pushing is illustrated in Fig. 2. The user's pushing energy is illustrated in Figs. 1 and 2 as a broken line u. In Fig. 2 it is assumed, just for easier explanation purposes, that the user's pushing energy u is constant over time t. It is one of the core ideas of the invention that the lawn mower is working with a constant working or motion speed v = v*, which corresponds to the drive motor speed. This is true for the entire time section illustrated in Fig. 1 and also for the time sections A and C in Fig. 2.

For this purpose, the user will set or tune in a predetermined speed v* by means of a motion speed selector 14 (see Figs. 4 - 7). The user will chose a speed v* at which he or she feels comfortable to work, even taken in consideration a grass surface which is not even, but hilly, and/or which has changing grass height. The selection of the predetermined speed v* will cause the control unit to adjust the actual speed v of the lawn mower to the predetermined speed value v*, independently of the load. It should be stressed that the lawn mower will maintain the working speed v = v* even when the load of the lawn mower increases, e.g. due to occurrence of a smaller hill of a bigger grass height that has to be mown.

The drive energy which the drive motor has to deliver over time t to the lawn mower is illustrated as curves p2 in Figs. 1 and 2. And the blade motor energy which the blade motor has to deliver over time t to the blade is illustrated as curves p1 in Figs. 1 - 3.

According to Fig. 1, it is assumed that the total energy p = p1 + p2 never exceeds a predetermined maximum energy value p* (which may be harmful to the battery). Yet, in Fig. 2 it is assumed that the user adds some pushing energy u to the total energy p = p1 + p2, and that the total electrical energy p = p1 + p2 would exceed the predetermined maximum energy value p* in a time interval B, but not in the adjacent time intervals A and C. This exceeding of the value p* is monitored. As a result of such a transition, the control unit will decrease the otherwise constant speed value v*, i.e. in the time interval B the speed v will be reduced by the reduction of v*, and the total electrical energy p will drop to the maximum value p*. This drop of p is indicated by a broken line in time section B. This serves as an effective protection measure for the battery.

The more the user pushes, that means the more the energy value u increases, the more the value p2 goes down, and p = (p1 + p2) goes down accordingly.

In other words: In Fig. 2 it is assumed that p = (p1 + p2) would exceed the maximum value p* in the time interval B. Since this may be harmful to the life of the battery, in the entire time interval B the maximum value v* is reduced by the control unit. This is indicated by the broken straight line under the hatched area. In the region C, the value p = p1 + p2 has fallen below the maximum value p*, as indicated by the continuous line under the value p*. Therefore, in this interval C the control unit has again lifted the value v* to assume its former altitude, which is shown in the time interval A.

It will be realized from Fig. 2, that the drive energy p2 is much smaller than the blade energy p1. Therefore, for an approximation of the ideal procedure shown in Fig. 2, it may be sufficient to neglect the drive energy p1 and control both motors with the blade energy p1 alone. This is illustrated in Fig. 3 as a base for the second basic embodiment.

According to the second basic embodiment and based on Fig. 3, there is provided a predetermined maximum blade motor energy value p1*, which represents here the protection value for the battery. In this case the predetermined speed value v* is reduced as soon as the energy consumption p1 of just the blade motor exceeds the predetermined maximum blade motor energy value p1*. This is the case in the time interval E, whereas in the adjacent time areas D and F the value v* is maintained constant. In Fig. 3, the reduction of the value v* is illustrated in the time interval E as the lower straight side of the hatched area of the curve v (t) = v*(t).

In an approximation, instead of the value p1* a predetermined blade current value i1* may be used for determining the time interval E in which the predetermined speed v* will be reduced.

According to Fig. 4, a lawn mower 2 comprises a battery 4 which energizes a drive motor 6 and a blade motor 8. Control of a first DC current i1 flowing through the blade motor 8 and a second DC current i2 flowing through the drive motor 6 is via a control unit 10. The battery 4 may be a conventional battery having a voltage of 24 volts and a capacity in the arrange of 14 to 20 Ah. The control unit 10 controls the second DC current i2 flowing to the drive motor 6 in such a way that the drive speed v is kept constant. For this purpose a speed monitor 12 is associated with the drive motor 6. This speed monitor 12 is connected to the control unit 10.

There is also provided a motion speed selector 14 by which a predetermined speed v* for the drive motor 6 can be selected by the user. This motion speed selector 14 is also connected to the control unit 10.

At the exit of the control unit 10, where the total DC current i = i1 + i2 is returned to the battery 4, a total energy monitor 16 is connected. This total energy monitor 16 measures the total energy consumption p, which is the electrical energy p2 consumed by the drive motor 6 plus the electrical energy p1 consumed by the blade motor 8. The currents i, i1 and i2 are proportional representatives of the energies p, p1 and p2, respectively.

There is also connected a maximum energy selector 18 for selecting a predetermined maximum total energy value p*. This value p* is represented by a maximum total current value i*. The predetermined maximum total energy value p* is the threshold value of energy which should not be extracted from the battery 4 in order to maintain a long lifetime and in order to avoid damage. The maximum energy selector 18 is also connected to the control unit.

As illustrated also in Fig. 4, the total energy monitor 16 may simply be a measuring device for measuring the total DC current i = i1 + i2, and the selector 18 may be a selector for setting the maximum total DC current i*.

In a connection line between the battery 4 and the control unit 10, a switch 20 is used for turning on and off the lawn mower operation.

A direction selector 22 is additionally connected to the control unit 10. The direction selector 22 may have a first position F for selecting forward movement and a second position R for selecting rearward movement of the lawn mower 2. Additionally, there may be provided a position (not shown) for stopping the lawn mower 2. A transition from the first to the second position F, R may directly result in a reversal of the rotation direction of the drive motor 6. The direction selector 22 may be positioned on the handle 24 of the lawn mower 2, preferably in easy reach of the user.

In Fig. 5 basically the same control system is illustrated as in Fig. 4. Yet, here the total energy monitor 16 comprises a first element for measuring the drive motor current i2, a second element for measuring the blade motor current i1, and an addition element 26 for receiving the values of these two currents i1, i2. The resulting value of i = i1 + i2 is fed into the control unit 10 for comparison with a predetermined maximum total current value i*. The current values i1, i2, i are representatives of the energies p1, p2, p, respectively.

The operation of the embodiments shown in Fig. 4 and 5 in the same as explained with reference to Fig. 2.

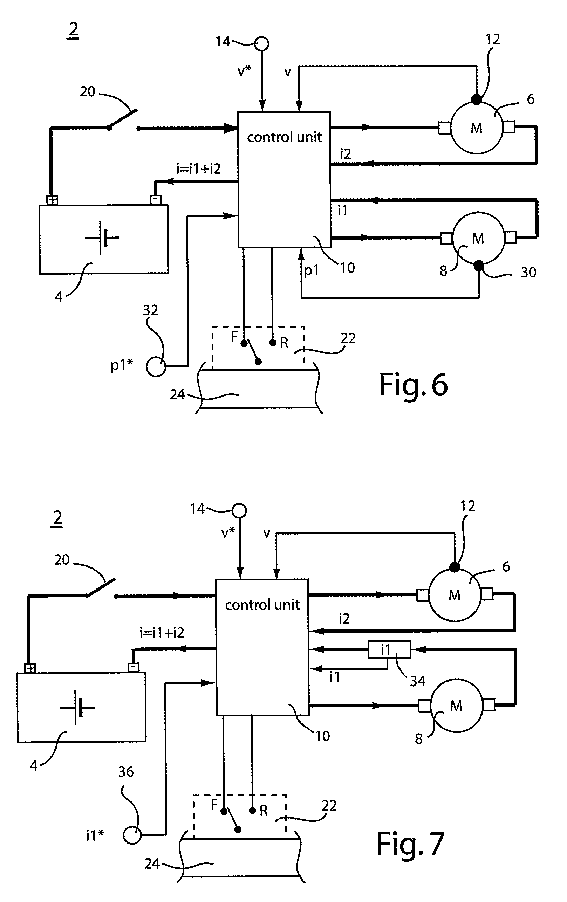

Fig. 6 illustrates a control system, in which an approximation according to the second basic embodiment is employed. In this control system, only measurement of the blade energy p1 is used for protection of the battery 4. For this purpose, a blade motor energy monitor 30 is associated with the blade motor 8. The blade motor energy monitor 30 measures the energy consumption p1 of the blade motor 8 and is connected to the control unit 10. A maximum blade motor energy selector 32 is provided for selecting a predetermined maximum blade motor energy value p1*. This maximum value p1* is compared with the actual blade motor energy consumption p1 of the blade motor 8. As explained above in connection with Fig. 3, the predetermined speed v* will be reduced as soon as the energy consumption p1 of the blade motor 8 exceeds the predetermined maximum blade motor energy value p1*. In Fig. 3, this is the case in the time interval E, not in the time intervals D and F. It will be realized that, as apposed to Fig. 4, a total energy monitor 16 is not used. In this case, it is sufficient to use the blade motor energy monitor 30.

In Fig. 7 is illustrated an embodiment similar to the embodiment of Fig. 6, yet in which the blade energy monitor 30 for monitoring the blade energy p1 is replaced by a blade motor current sensor 34. The value i1 derived from this sensor 34 is also introduced into the control unit 10. Additionally a blade motor maximum current selector 36 provides a maximum blade current i1*. This sensor 34 is connected to the control unit 10 for comparing the values i1 and i1* with each other. A transition of i1* by i1 is again used for a reduction of the predetermined speed limit v* such that the value i1= i1* is maintained.

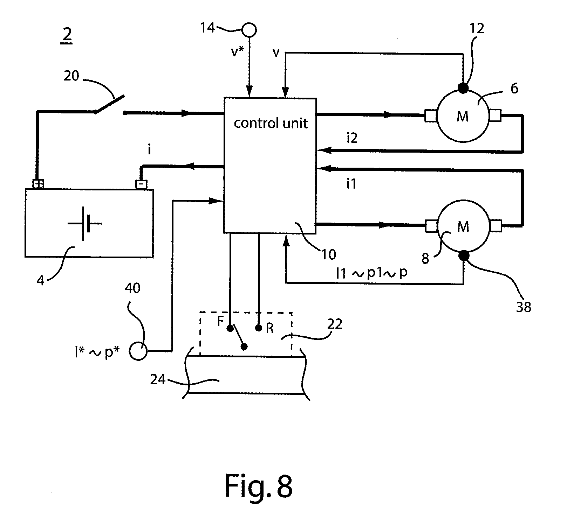

In Fig. 8 a realization of the third basic embodiment is shown. Here a blade load monitor 38 is used for monitoring the blade load 11. The blade load l1 is a not exactly accurate, but sufficiently precise measure of the blade motor current i1 and of the blade motor energy p1 that is consumed by the blade motor 8, the value i1 again is approximately proportional to the total energy p = p1 + p2. The blade load monitor 38 is connected to the control unit 10. There may also be provided a blade load selector 40 which is connected to the control unit 10. This selector 40 provides a predetermined maximum blade load value l1* By comparison of the values l1 and l1*, the control unit 10 determines when the total energy p, preferably the speed v, has to be reduced. In the example shown, this is the case in the time interval E.

### List of Reference Signs

- 2: self-propelled lawn mower
- 4: on-board battery
- 6: drive motor
- 8: blade motor
- 10: control unit
- 12: speed monitor or sensor
- 14: motion speed selector
- 16: total energy monitor
- 18: maximum total energy selector
- 20: switch for energizing motors 8, 12
- 22: direction selector
- 24: handle of lawn mower 2
- 26: addition element
- 30: blade motor energy monitor
- 32: blade motor maximum energy selector
- 34: blade motor current sensor
- 36: blade motor maximum current selector
- 38: blade load monitor
- 40: maximum blade load selector

- i: total current of motors 6, 8
- i1: first current flowing through blade motor 8
- i2: second current flowing through drive motor 6
- i*: predetermined maximum total current of motors 6, 8
- i1*: predetermined maximum current of blade motor 8
- l1: blade load
- l*: predetermined maximum blade load value
- p: total energy consumption of battery 4
- p1: energy of blade motor 8
- p2: energy of drive motor 6
- p*: predetermined maximum total energy value
- p1*: predetermined maximum blade energy value
- t: time
- u: energy of user
- v: actual speed of drive motor 6 (corresponds to speed of lawn mower 2)
- v*: predetermined speed of drive motor 6
- F: first position for forward movement
- R: second position for rearward movement.

## Claims

1. A self-propelled lawn mower, comprising
- an on-board battery (4),
- an electric blade motor (8) for rotating a grass cutting blade, said blade motor (8) being operationally connected to said battery (4),
- an electric drive motor (6) for propelling the lawn mower (2) along a grass surface to be cut, said drive motor (6) being operationally connected to said battery (4),
- a control unit (10) for controlling the operation of said electric drive motor (6), thereby controlling the movement of the lawn mower (2),
**characterized**
- **in** a speed monitor (12) for monitoring the speed (v) of said drive motor (6), said speed monitor (12) being operationally connected to said control unit (10),
- in a motion speed selector (14) for selecting a predetermined speed (v*) for said drive motor (6), said motion speed selector (14) being operationally connected to said control unit (10),
- in a total energy monitor (16) for monitoring the total energy consumption (p) of said battery (4), said total energy consumption (p) being the electrical energy (p2) consumed by said drive motor (6) plus the electrical energy (p1) consumed by said blade motor (8), said total energy monitor (16) being operationally connected to said control unit (10),
- in a maximum total energy selector (18) for selecting a predetermined maximum total energy value (p*), said maximum total energy selector (18) being operationally connected to said control unit (10), and
- in said control unit (10) being designed
- - to keep the speed (v) of the lawn mower (2) on said predetermined speed (v*), independently of the pushing force (u) of the user, and
- - to reduce the total energy (p) as soon as the total energy (p) exceeds said predetermined maximum energy value (p*).

2. The self-propelled lawn mower in accordance with claim 1, wherein said predetermined maximum total energy value (p*) is represented by a maximum total current value (i*), and wherein said maximum total energy selector (18) is represented by a maximum total current selector setting said predetermined maximum total current value (i*).

3. The self-propelled lawn mower in accordance with claim 1 or 2, wherein said reduction of energy (p) is performed by reducing the predetermined speed (v*) of said drive motor (6), thereby reducing the actual speed (v) of said drive motor (6).

4. The self-propelled lawn mower in accordance with claim 1, 2 or 3, wherein said total energy monitor (16) is designed to measure a first current (i1) flowing through said blade motor (8) and to measure a second current (i2) flowing through said drive motor (6) and to add said first and said second current (i1, i2) to deliver a total current (i) which is representative of said total energy consumption (p) derived from said battery (4).

5. The self-propelled lawn mower in accordance with claim 1, 2 or 3, wherein said total energy monitor (16) is a device for measuring directly the total current (i) flowing to or from said battery.

6. The self-propelled lawn mower in accordance with any of the claims 1 to 5,
wherein a direction selector (22) is operationally connected to said control unit (10), said direction selector (22) having at least a first position (F) for forward movement and a second position (R) for rearward movement of the lawn mower (2).

7. The self-propelled lawn mower in accordance with claim 6, wherein a transition from the first to the second position (F, R) directly results in a reversal of the rotation direction of said drive motor (6).

8. The self-propelled lawn mower in accordance with claim 6 or 7, wherein said direction selector (22) is positioned on the handle (24) of the lawn mower (2).

9. The self-propelled lawn mower in accordance with any of the preceding claims, wherein said drive motor (6) is a permanent magnet DC motor having an output of less than 0.5 hp.

10. A self-propelled lawn mower, comprising
- an on-board battery (4),
- an electric blade motor (8) for rotating a grass cutting blade, said blade motor (8) being operationally connected to said battery (4),
- an electric drive motor (6) for propelling the lawn mower (2) along a grass surface to be cut, said drive motor (6) being operationally connected to said battery (4),
- a control unit (10) for controlling the operation of said electric drive motor (6), thereby controlling the movement of the lawn mower (2),
**characterized**
- **in** a speed monitor (12) for monitoring the speed (v) of said drive motor (6), said speed monitor (12) being operationally connected to said control unit (10),
- in a motion speed selector (14) for selecting a predetermined speed (v*) for said drive motor (6), said motion speed selector (14) being operationally connected to said control unit (10),
- in a blade motor energy monitor (30) for monitoring the energy consumption (p1) of said blade motor (8), said blade motor energy monitor (30) being operationally connected to said control unit (10),
- in a blade motor maximum energy selector (32) for selecting a predetermined maximum blade motor energy value (p1*),
- in said control unit (10) being designed
- - to keep the speed (v) of the lawn mower (2) on said predetermined speed (v*), independently of the pushing force (u) of the user, and
- - to reduce the predetermined speed (v*) as soon as the energy consumption (p1) of said blade motor (8) exceeds said predetermined maximum blade motor energy value (p1*).

11. The self-propelled lawn mower in accordance with claim 10, wherein said control unit (10) is designed to use a current (i1) flowing through said blade motor (8) as representation of said energy consumption (p1) of said blade motor (8).

12. The self-propelled lawn mower in accordance with claim 10 or 11, wherein said predetermined maximum blade motor energy value (p1*) is represented by a predetermined maximum blade current value (i1*), and wherein said blade motor maximum energy selector (32) is represented by a blade motor maximum current selector (36) for setting said predetermined maximum blade motor current value (i1*).

13. The self-propelled lawn mower in accordance with any of the claims 10 to 12, wherein a direction selector (22) is operationally connected to said control unit (10), said direction selector (22) having at least a first position (F) for forward movement and a second Position (R) for rearward movement of the lawn mower (2).

14. The self-propelled lawn mower in accordance with claim 13, wherein said direction selector (22) is positioned on the handle (24) of the lawn mower (2).

15. A self-propelled lawn mower, comprising
- an on-board battery (4),
- an electric blade motor (8) for rotating a grass cutting blade, said blade motor (8) being operationally connected to said battery (4),
- an electric drive motor (6) for propelling the lawn mower (2) along a grass surface to be cut, said drive motor (6) being operationally connected to said battery (4),
- a control unit (10) for controlling the operation of said electric drive motor (6), thereby controlling the movement of the lawn mower (2),
**characterized**
- **in** a speed monitor (12) for monitoring the speed (v) of said drive motor (6), said speed monitor (12) being operationally connected to said control unit (10),
- in a motion speed selector (14) for selecting a predetermined speed (v*) for said drive motor (6), said motion speed selector (14) being operationally connected to said control unit (10),
- in a blade load monitor (38) for monitoring the blade load (I) of said blade motor (8), said blade load (I) being the representative of the blade motor current (i1) and thereby approximately of the total energy (p) consumed by said blade motor (8) and said drive motor (6), said blade load monitor (38) being operationally connected to said control unit (10) for approximately determining said total energy (p),
- in a maximum total energy selector (40) for selecting a predetermined maximum total energy value (p*), said maximum total energy selector (18) being operationally connected to said control unit (10), and
- in said control unit (10) being designed
- - to keep the speed (v) of the lawn mower (2) on said predetermined speed (v*), independently of the pushing force (u) of the user, and
- - to reduce the total energy (p) as soon as the total energy (p), which is determined from blade load (l1), exceeds a predetermined maximum blade load value (1*).

16. The self-propelled lawn mower in accordance with claim 15, wherein said reduction of energy (p) is performed by reducing the predetermined speed (v*) of said drive motor (6), thereby reducing the actual speed (v) of said drive motor (6).

17. The self-propelled lawn mower in accordance with any of the preceding claims, wherein the speed selector (14) is positioned on the handle (24) of the lawn mower (2).
